# EUROPÄISCHE PATENTSCHRIFT

(11) **EP 0 665 709 B1**
(45) Veröffentlichungstag und Bekanntmachung des Hinweises auf die Patenterteilung: **21.10.1998**
(21) Anmeldenummer: 94925035.1
(22) Anmeldetag: 11.08.1994
(51) Int. Cl.: A01G 27/00

(54) **VORRICHTUNG ZUM HALTEN EINES BLUMENTOPFES ODER DERGLEICHEN IN EINER ERHÖHTEN STELLUNG GEGENÜBER DEM BODEN EINES ÜBERTOPFES ODER DERGLEICHEN**
DEVICE FOR KEEPING A FLOWER POT OR THE LIKE RAISED FROM THE BOTTOM OF A FLOWER POT CONCEALER OR THE LIKE
DISPOSITIF DE MAINTIEN D'UN POT DE FLEURS OU ANALOGUE EN POSITION SURELEVEE PAR RAPPORT AU FOND D'UN CACHE-POT OU ANALOGUE

(30) Priorität: 18.08.1993 NO 932932
(43) Veröffentlichungstag der Anmeldung: 09.08.1995
(73) Patentinhaber: Joswig, Helmut, D-45522 Hattingen (DE); Joswig, Siegfried, N-1800 Askim (NO)
(72) Erfinder: JOSWIG, Siegfried, N-1800 Askim (NO)
(74) Vertreter: Behrendt, Arne, Dipl.-Ing.
(86) Internationale Anmeldenummer: NO9400133
(87) Internationale Veröffentlichungsnummer: WO9505069

(56) Entgegenhaltungen:
- DE-A- 2 541 020
- DE-A- 2 628 392

## Beschreibung

Die vorliegende Erfindung betrifft eine Vorrichtung, um einen Blumentopf in einem Abstand zum Boden eines wasserdichten Übertopfes hochzuhalten. Mit Hilfe einer solchen Vorrichtung wird durch einen Docht, der sich von einem Wasservorrat im Boden des Übertopfes in die Wurzeln und das Erdreich des Blumentopfes erstreckt, eine Langzeitbewässerung der Pflanzen in dem Topf ermöglicht, zum Beispiel während einer Urlaubsabwesenheit, ohne gleichzeitig eine Überwässerung zu bewirken, wobei der untere Teil des Topfes im Wasser untergetaucht steht. Solche Übertöpfe können die Form eines größeren Topfes (möglicherweise mit außen angebrachten Verzierungen) haben, in welchen der Blumentopf gestellt wird oder sie können die Form eines Blumenkastens oder einer ähnlichen Vorrichtung zur Aufnahme von Blumentöpfen im Haus, auf einem Balkon oder auf Terrassen aufweisen.

Für eine solche Vorrichtung sind mehrere Vorschläge gemacht worden, unter anderem in EP 016352 und EP 025521, in FR 1152961 und in US 2072172 sowie in DE-OS 25 41 020 und DE-OS 26 28 392. Die vorliegende Erfindung geht von der Vorrichtung aus der DE-OS 26 28 392 aus. Diese und andere schon bekannte Vorrichtungen für diesen Zweck weisen jedoch allesamt den Nachteil auf, daß der Blumentopf und/oder der Übertopf an die jeweilige Vorrichtung speziell angepaßt sein müssen.

Die vorliegende Erfindung betrifft eine Vorrichtung der oben genannten Art und für den oben genannten Zweck, wobei eine spezielle Anpassung des Blumentopfes oder des Übertopfes nicht mehr erforderlich ist. Die Vorrichtung gemäß der Erfindung ist einfach in der Handhabung und preiswert und kann in verschiedenen Größen geliefert werden, um den Einsatz der Vorrichtung in Verbindung mit Blumentöpfen und Übertöpfen verschiedener Größe zu ermöglichen.

Folglich betrifft die vorliegende Erfindung eine Vorrichtung wie sie im Anspruch 1 wiedergegeben ist.

Weitere Merkmale der Erfindung ergeben sich aus den abhängigen Ansprüchen. Die Merkmale und Vorteile der Erfindung werden auch in der folgenden Beschreibung erläutert, welche sich auf die Zeichnungen bezieht, wobei
- Fig. 1: eine Draufsicht einer Ausführungsform der Vorrichtungen gemäß der Erfindung;
- Fig. 2 und 3: schematisch und teilweise im Schnitt zwei Anwendungsbeispiele der Vorrichtungen gemäß Fig. 1;
- Fig. 4 und 5: im Detail, teilweise im Schnitt, eine Ansicht von der Seite und von unten der Vorrichtung gemäß Fig. 1 im Anwendungsbeispiel aus Fig. 3;
- Fig. 6: eine Draufsicht einer anderen Anwendungsform der Erfindung zeigen.

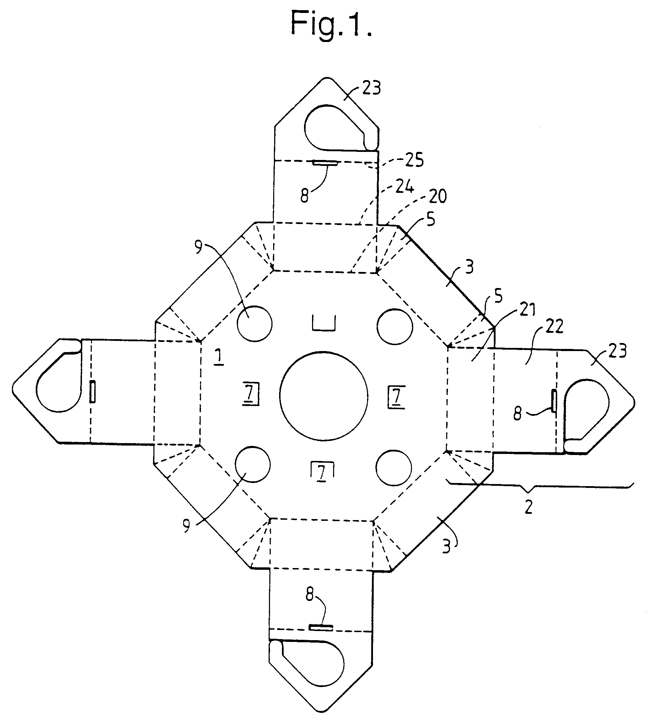

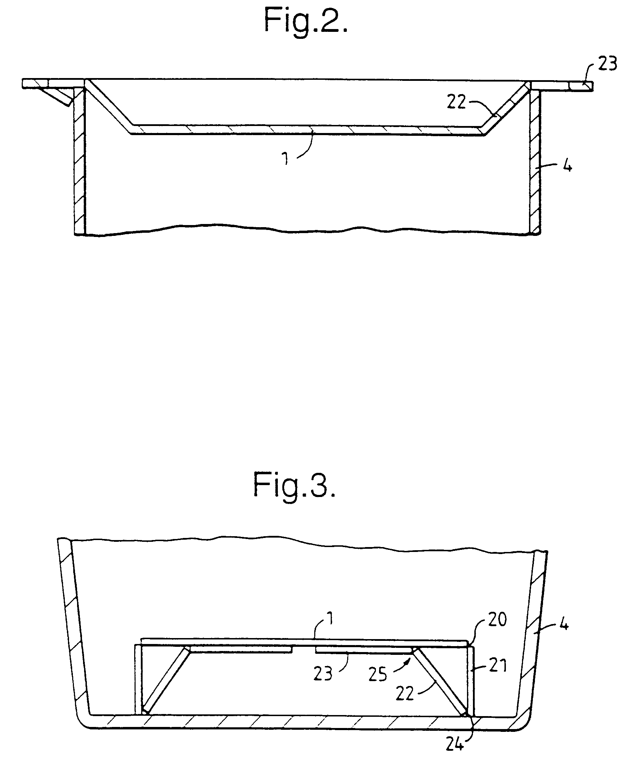

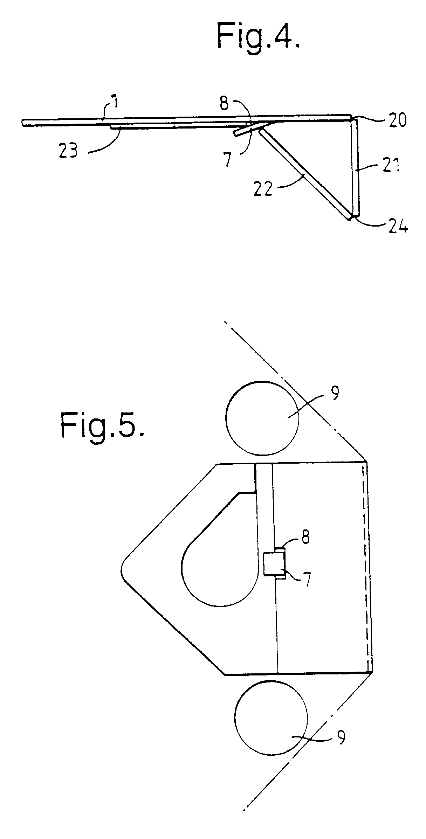

Fig. 1 offenbart eine Ausführungsform der Vorrichtung gemäß der Erfindung, um einen Blumentopf in einem Abstand vom Boden eines Übertopfes hochzuhalten. Die besagte Vorrichtung umfaßt eine ursprünglich ebene Platte aus Kunststoff, zum Beispiel aus einer 1 mm dicken Platte aus Polypropylen oder Polyethylen. Die ebene Platte umfaßt eine mittlere Partie 1 und rundherum gesonderte Kantenpartien 2 und 3, die klappbar mit der mittleren Partie 1 verbunden sind. Ein Satz Kantenpartien 2 besteht aus klappbar miteinander verbundenen Bereichen 21, 22 und 23, die durch Umklappen entlang der entsprechenden Scharniere 20, 24 und 25 Stützfüsse bilden, die auf dem Boden eines Übertopfes 4 angebracht werden, wie es aus Fig. 3 und im Detail aus Fig. 4 und 5 hervorgeht.

Um die Kantenpartien 2 in einem geknickten Zustand festzustellen, vergleiche Fig. 3 und 4, ist die mittlere Partie 1 mit Klappen 7 versehen, die in die entsprechenden Vertiefungen oder Ausschnitte 8 in den Kantenpartien 2 eingreifen. Verschieden geformte ineinandergreifende Elemente sind denkbar, z.B. Zapfen oder Stifte, die in Löcher oder Bohrungen einschnappen.

Um die Vorrichtung gemäß der Erfindung am Rand des Übertopfes 4 einzuhaken, sind die äußeren Bereiche 23 der Kantenpartien 2 hakenförmig ausgebildet. Weitere Kantenpartien 3 sind als Alternative oder zusätzlich zu den hakenförmigen Bereichen 23 der erstgenannten Kantenpartien 2 mit einer ähnlichen hakenförmigen Ausführungsform versehen. Die hakenähnlichen Bereiche 23 der Kantenpartien 2 und/oder die entsprechenden hakenförmigen Bereiche der anderen Kantenpartien 3 können wunschgemäß in einer anderen hakenförmigen Ausführungsform als in den Fig. 1 bis 5 gezeigt ausgeführt werden.

Alternativ können einzelne Hakenelemente eingesetzt werden, welche lösbar mit den entsprechenden Kantenpartien 2 und/oder 3 durch eine ineinandergreifende Zapfen-Loch-Verbindung oder auf andere Weise verbunden sind.

Wie aus Fig. 1 hervorgeht, sind die Kantenpartien 2 und 3 klappbar durch ein doppeltes Scharnier miteinander verbunden, aber die Kantenpartien 2 und 3 können alternativ durch ineinandergreifende Zapfen-Loch-Verbindungen oder entsprechende Anordnungen lösbar verbunden sein, wobei die Kantenpartien 3 in einer schrägen Position relativ zur mittleren Partie 1 gehalten werden, wenn die Kantenpartien 2 relativ zur mittleren Partie 1 geklappt sind. Dadurch wird die mittlere Partie 1 versteift, um den Blumentopf besser tragen zu können.

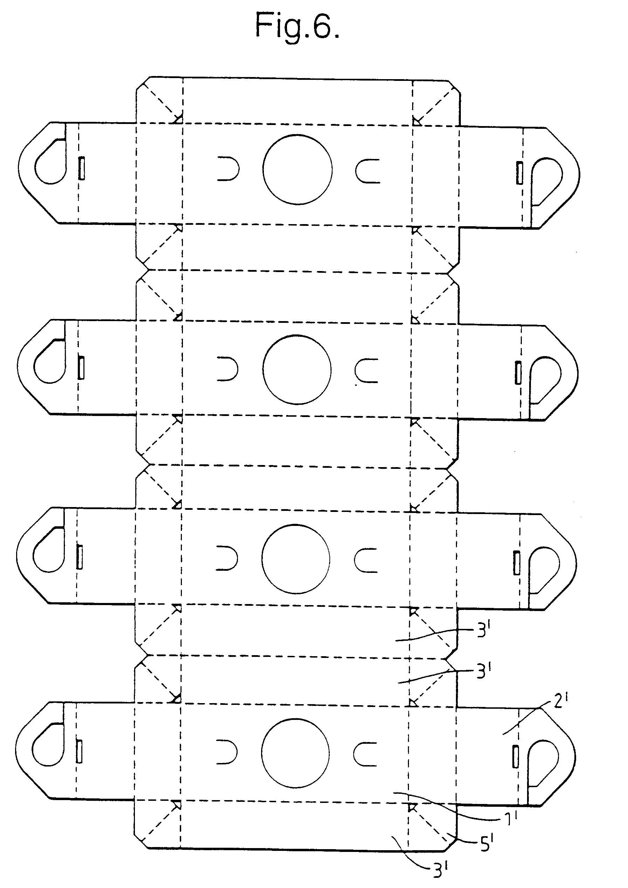

Fig. 6 zeigt eine alternative Ausführungsform, die besonders für den Einsatz in Verbindung mit Blumenkästen oder ähnlichen Vorrichtungen zur Aufnahme von Blumentöpfen im Haus oder auf einem Balkon oder auf Terrassen. In dieser Ausführungsform sind verschiedene Elemente in einer Reihe miteinander verbunden, wobei jedes Element aus einer mittleren Partie 1', mit Kantenpartien 2' und 3' besteht, die klappbar mit der angrenzenden mittleren Partie 1' verbunden sind. Die Kantenpartien 2' bestehen, ähnlich wie die Kantenpartien 2 aus Fig. 1, aus mehreren klappbar miteinander verbundenen Bereichen, von denen der äußere hakenförmig ausgebildet ist. Die Kantenpartien 2' und 3' jedes Elementes sind untereinander durch Doppelscharniere 5' oder durch lösbare Verbindungen wie oben als Alternative zu den Doppelscharnieren beschrieben, verbunden.

Eine Kantenpartie 3' eines Elements 1' ist klappbar mit einer ähnlichen Kantenpartie eines angrenzenden Elements verbunden, so daß die Elemente mehrere mittlere Partien 1' bilden, die entlang zweier Kanten mit Haken ausgebildet sind. Die Scharnierverbindung zwischen den angrenzenden Elementen dienen zweckmäßigerweise als Reißkanten, um durch das Entfernen einer oder mehrerer Elemente die Reihe zu verkürzen.

Die Kantenpartien 2' können, ähnlich wie die Kantenpartien 2 aus Fig. 1, in den Rand eines Übertopfes, der die Form eines Blumenkastens hat, eingehakt werden. Diese Kantenpartien 2' können alternativ, ähnlich wie die Kantenpartien 2 aus Fig. 3 und 4, gefaltet werden, um Stützfüsse zu bilden.

Die mittlere Partie 1 (Fig. 1) ist mit Öffnungen 9 ausgestattet, durch die ein Docht von einem Wasservorrat in dem Boden des Übertopfes 4 und durch den Boden des Blumentopfes durchführbar ist.

Durch den Einsatz der Vorrichtung gemäß der Erfindung kann ein Blumentopf mit Wasser und mit Blumendünger versorgt werden, sogar während einer längeren Abwesenheit der Person, die die Blumen versorgt. Selbst wenn sich die Vorrichtung in der angehobenen Position an dem Rand des Übertopfes eingehakt befindet, wird der Docht den Sonnenstrahlen nicht direkt ausgesetzt und ist folglich nicht einem raschen Austrocknen unterworfen.

## Patentansprüche

1. Vorrichtung, um einen Blumentopf in einem Abstand zum Boden eines wasserfesten Übertopfes (4) hochzuhalten, wobei die Wurzeln und das Erdreich in dem Blumentopf über mindestens einen Docht, der in einen Wasservorrat am Boden des Übertopfes (4) unterhalb des Bodens des Blumentopfes reicht, mit Feuchtigkeit versorgt werden, wobei die Vorrichtung aus einer vor deren Verwendung ebenen Platte besteht, mit einer mittleren Partie (1), die den Blumentopf trägt, und mehreren sich von dem Rand der mittleren Partie (1) radial nach außen erstreckenden Kantenpartien (2), die klappbar mit der mittleren Partie (1) verbunden sind, so daß diese durch Umklappen der Kantenpartien (2) über den Boden des Übertopfes (4) angehoben wird, und die mittlere Partie (1) ist mit mindestens einer Öffnung (9) ausgestattet, durch die die Dochte durchführbar sind, **dadurch gekennzeichnet,** daß zwischen den tragenden Kantenpartien (2) weitere sich von dem Rand der mittleren Partie (1) radial nach außen erstreckende Kantenpartien (3) vorgesehen sind, welche ebenfalls klappbar mit der mittleren Partie (1) verbunden sind, um durch Umklappen dieselbe zu versteifen, und welche klappbar oder lösbar mit den tragenden Kantenpartien (2) verbunden sind.

2. Vorrichtung nach Anspruch 1, dadurch gekennzeichnet, daß die tragenden Kantenpartien (2) aus mehreren klappbar miteinander verbundenen Bereichen (21, 22, 23) bestehen, die so ausgeführt sind, daß sie durch Umklappen entlang der Scharniere (20, 24, 25) Stützfüße bilden, die auf dem Boden des Übertopfes (4) anbringbar sind.

3. Vorrichtung nach Anspruch 1 oder 2, dadurch gekennzeichnet, daß jede tragende Kantenpartie (21, 22, 23) an ihrem äußeren Ende hakenförmig ausgebildet ist.

4. Vorrichtung nach Anspruch 1 oder 2, dadurch gekennzeichnet, daß jede tragende Kantenpartie (21, 22, 23) mit Noppen und/ oder Öffnungen für eine lösbare Verbindung zur Arretierung der Kantenpartien (21, 22, 23) in umgeklapptem Zustand versehen ist, um die Bereiche der Kantenpartien (21 22, 23) mit den entsprechenden Öffnungen oder Noppen aneinanderzuhaken.

5. Vorrichtung nach Anspruch 1 oder 2, dadurch gekennzeichnet, daß sie aus einer Vielzahl von Einzelabschnitten zusammengesetzt ist, wobei jeder Einzelabschnitt eine mittlere Partie (1') und sich von dem Rand der mittleren Partie (1) radial nach außen erstreckende Kantenpartien (2', 3') aufweist und eine Kantenpartie (3') eines Einzelabschnitts mit einer entsprechenden Kantenpartie (3') eines angrenzenden Einzelabschnitts klappbar verbunden ist.

6. Vorrichtung nach Anspruch 5, dadurch gekennzeichnet, daß jede tragende Kantenpartie (2') an ihrem äußeren Ende hakenförmig ausgebildet ist.

7. Vorrichtung nach Anspruch 5, dadurch gekennzeichnet, daß jede tragende Kantenpartie (2') mit Noppen und/ oder Öffnungen für eine lösbare Verbindung zur Arretierung der Kantenpartien (2') in umgeklapptem Zustand versehen ist, um die Bereiche der Kantenpartien (2') mit den entsprechenden Öffnungen oder Noppen aneinanderzuhaken.

## Claims

1. A device for keeping a flower pot up at a spacing from the bottom of a water-tight pot container, wherein the roots and the soil in the flower pot are supplied with moisture by way of a wick which extends into a water supply at the bottom of the pot container below the bottom of the flower pot, wherein the device comprises an originally flat plate with a central portion (1) which supports the flower pot and a plurality of circumferentially separated edge portions (2) which are of such a configuration that the central portion (1) is lifted above the bottom of the pot container (4), characterised in that provided between said supporting edge portions (2) which are hingedly connected to the central portion (1) are further circumferentially separated edge portions (3) which are also hingedly connected to the central portion (1) for stiffening same and said edge portions (3) are hingedly or releasably connected to the supporting edge portions (2).

2. A device according to claim 1 characterised in that the supporting edge portions (2) comprise a plurality of regions (21, 22, 23) which are hingedly connected together and which are of such a configuration that by being folded over along the hinges they form supporting feet which can be placed on the bottom of the pot container (4).

3. A device according to claim 1 or claim 2 charaterised in that each supporting edge portion (21, 22, 23) is of a hook-shaped configuration at its outer end.

4. A device according to claim 1 or claim 2 characterised in that each supporting edge portion (21, 22, 23) is provided with knobs and/or openings for releasable connection for hooking the elements to each other with the corresponding openings or knobs.

5. A device according to claim 1 or claim 2 characterised in that it is composed of a plurality of units, wherein each has a central portion (1') and circumferentially separated edge portions (2', 3') and an edge portion (3') of a unit is hingedly connected to a corresponding edge portion (3') of an adjoining unit.

6. A device according to claim 5 characterised in that each supporting edge portion (2') is of a hook-shaped configuration at its outer end.

7. A device according to claim 5 characterised in that each supporting edge portion (2') is provided with knots and/or openings for releasable connection for hooking the elements to each other with the corresponding openings or knobs.

## Revendications

1. Dispositif pour maintenir un pot de fleurs à une certaine distance du fond d'un sur pot étanche à l'eau où les racines et la terre dans le pot de fleurs sont alimentées en humidité par une mèche qui atteint une réserve d'eau au fond du support en dessous du fond du pot de fleurs, où le dispositif se compose d'une plaque plane à l'origine, avec une partie médiane (1), qui porte le pot de fleurs et plusieurs parties de côté spéciales (2) disposées tout autour, qui sont configurées de façon que la partie médiane (1) soit soulevée au dessus du fond du sur-pot, caractérisé en ce qu'entre lesdites parties de côté porteuses (2) qui sont reliées repliables avec la partie médiane (1), d'autres parties de côté spéciales disposées tout autour (3) sont prévues qui sont également reliées repliables avec la partie médiane (1), pour raidir celle-ci et lesdites parties de côté (3) sont reliées repliables ou détachables avec les parties de côté porteuses (2).

2. Dispositif selon la revendication 1, caractérisé en ce que les parties de côté porteuses (2) se composent de plusieurs zones reliées repliables les unes aux autres (21, 22, 23) qui sont réalisées de façon que, par rabattement le long de charnières, soient formés des pieds d'appui qui peuvent être placés sur le fond du sur-pot (4).

3. Dispositif selon la revendication 1 ou 2, caractérise en ce que chaque partie de côté porteuse (21, 22, 23) est configurée en crochet à son extrémité externe.

4. Dispositif selon la revendication 1 ou 2, caractérisé en ce que chaque partie de côté porteuse (21, 22, 23) est pourvue de boutons et/ou ouvertures pour une liaison détachable afin d'accrocher les uns aux autres les éléments au moyen des ouvertures ou boutons correspondants.

5. Dispositif selon la revendication 1 ou 2, caractérisé en ce qu'il se compose d'un certain nombre d'unités, où chacune présente une partie médiane (1') et tout autour des parties spéciales de côté (2', 3') et une partie de côté (3') d'une unité est reliée repliable avec une partie de côté correspondante (3') d'une unité adjacente.

6. Dispositif selon la revendication 5, caractérisé en ce que chaque partie de côté porteuse (2') est configurée en crochet à son extrémité externe.

7. Dispositif selon la revendication 5, caractérisé en ce que chaque partie de côté porteuse (2') est pourvue de boutons et/ou ouvertures pour une liaison détachable afin d'accrocher les uns aux autres les éléments au moyen des ouvertures ou boutons correspondants.
